# EUROPEAN PATENT APPLICATION

(11) **EP 1 762 769 A2**
(43) Date of publication of application: **14.03.2007**
(21) Application number: 06120036.6
(22) Date of filing: 04.09.2006
(51) Int. Cl.: F16L 29/04

(54) **Emergency release coupling**

(30) Priority: 09.09.2005 IT MI20051663
(71) Applicant: Bormioli, Lorenzo, 35100 Padova (IT)
(72) Inventor: Bormioli, Lorenzo, 35100 Padova (IT)
(74) Representative: Mittler, Enrico

(57) **Abstract**

The invention concerns a safety device for carrying out in sequence the closing of the valves and the opening of the uncoupling device in a pipe fitting operating in dangerous conditions. The fitting (100) is made up of two couplable and uncouplable parts (1,2), connectable to respective pipes and provided with respective opening and closing valves (5,6), and of an openable uncoupling device (17) acting on terminal flanges (15,16) of the two parts of the fitting. The safety device (200) includes a hydrodynamic control cylinder (23) provided with a rod (24) capable of carrying out a closing stroke of the valves (5,6) and an opening stroke the uncoupling device (17).

## Description

The present invention refers to a safety device for carrying out in sequence the closing of the valves and the opening of the uncoupling device in a pipe fitting operating in dangerous conditions.

For connecting pipes for petroleum products located at stations subject to reciprocal movement, such as for example a ship and a station on land or a ship and a deep-sea platform, or between ship and ship, it is usual to employ fittings made up of two parts which can be coupled together and uncoupled, connectable to respective pipes and provided with respective opening and closing valves, and of an uncoupling device openable by acting on terminal flanges of the two parts of the fitting.

During the transfer of a petroleum product with the fitting in coupled condition and with the valves open, an abnormal condition can occur such as a high wind, a rough sea, breakage of a mooring etc., which is such as to distance one pipe from the other excessively, with the consequent need to uncouple the fitting immediately in order to avoid damage to the equipment connected to the fitting or in proximity to it.

Naturally the two parts of the fitting must be able to be uncoupled only after the respective valves have been closed, so as to avoid unintentional losses of product. In other words, the complete sequence of closing the valves must be followed before the separation of the fitting occurs.

The object of the present invention is therefore to construct a safety device for connecting pipes which is capable of carrying out in rapid but secure succession the sequence of closing the valves and uncoupling the two parts of the fitting at the moment at which a danger situation brings about the sending of a command to do so.

According to the present invention, this object is achieved with a safety device characterised by including a hydrodynamic control cylinder equipped with a rod capable of carrying out a closing stroke of the valves and an opening stroke of the uncoupling device, said rod having one end capable of operating during a first part of the stroke of said rod on a control lever capable of closing the valves through a compressible elastic body capable of being compressed only after said lever has caused the closure of the valves, said end of the rod being further connected to a control bar capable of opening the uncoupling device which can be engaged in abutment against an opening lever of said uncoupling device only following a compression of said elastic body produced by a second part of the cycle of said rod.

Through suitable adjustment of the compressible elastic body it is thus possible to carry out first the closure of the valves, which is performed with the elastic body practically uncompressed, and then the opening of the device for uncoupling the fitting, which is performed following the compression of the elastic body after the closure of the valves themselves.

The characteristics of the present invention will be made more clearly evident from the following detailed description of a practical embodiment which is illustrated by way of example but without limiting effect in the attached drawings, in which:
Figure 1 shows in perspective a pipe fitting fitted with a safety device according to the present invention, in the condition with valves open and uncoupling device in the closed position;
Figure 2 shows the above-mentioned fitting in a lateral view, in the same condition as in Figure 1;
Figure 3 shows the fitting on top plan view, in the same condition as in Figure 1;
Figure 4 shows the fitting longitudinally sectioned along line IV-IV in Figure 3;
Figure 5 shows the fitting transversely sectioned along line V-V shown in Figure 4;
Figure 6 shows the detail in longitudinal section of the compressible elastic body included in the above-mentioned safety device, seen in the condition of Figure 1;
Figure 7 shows the same fitting in perspective view in the condition with valves half-closed and uncoupling device still closed;
Figure 8 shows the fitting in a lateral view, in the same condition as in Figure 7;
Figure 9 shows the fitting on top plan view, in the same condition as in Figure 7;
Figure 10 shows the same fitting in perspective view in the condition with valves closed and uncoupling device still closed;
Figure 11 shows the fitting in lateral view, in the same condition as in Figure 10;
Figure 12 shows the fitting on top plan view, in the same condition as in Figure 10;
Figure 13 shows the fitting in longitudinal section along line XIII-XIII in Figure 12;
Figure 14 shows the same fitting in perspective view in the condition with valves closed and uncoupling device in the open position;
Figure 15 shows the fitting in lateral view, in the same condition as in Figure 14;
Figure 16 shows the fitting on top plan view, in the same condition as in Figure 14;
Figure 17 shows the fitting in transverse section along line XVII-XVII in Figure 15;
Figure 18 shows the fitting on top plan view in the process of separation.

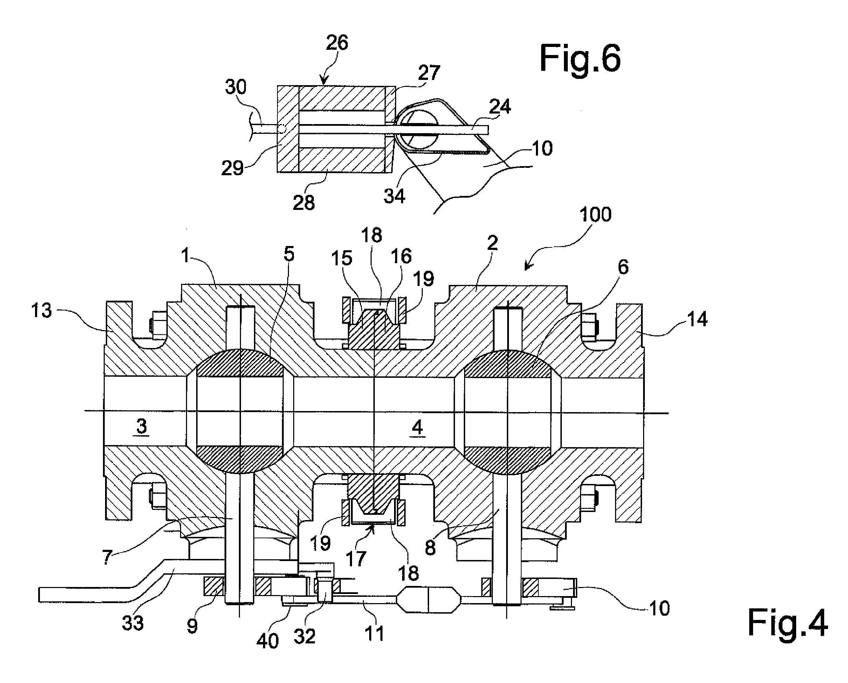

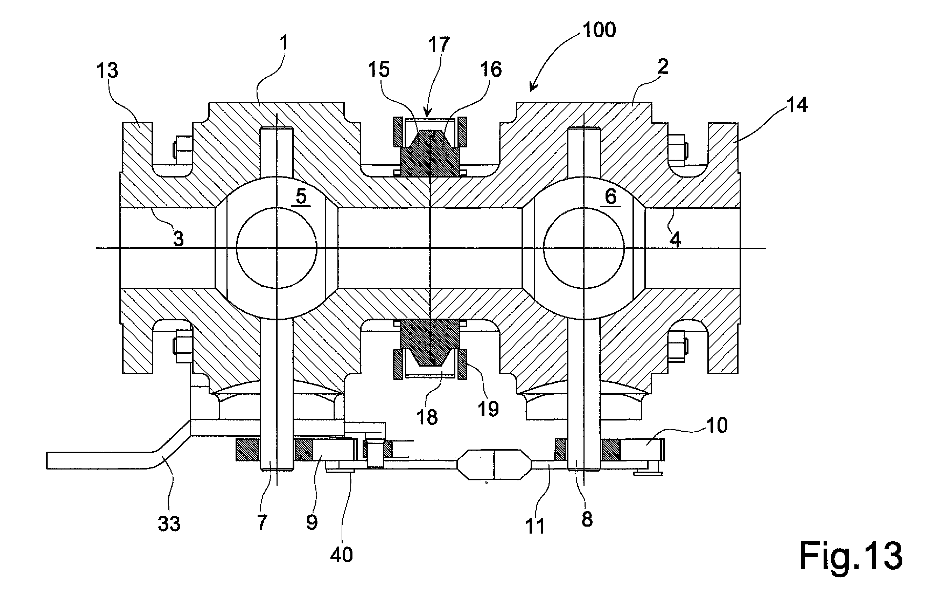

The drawings show by way of example and denote comprehensively with the number 100 a pipe fitting, in particular for petroleum products, which is made of two parts 1 and 2, crossed by respective aligned passageways 3 and 4 controlled by respective spherical valves 5 and 6 rotatable between the open position of Fig. 4 and the closed position of Fig. 13.

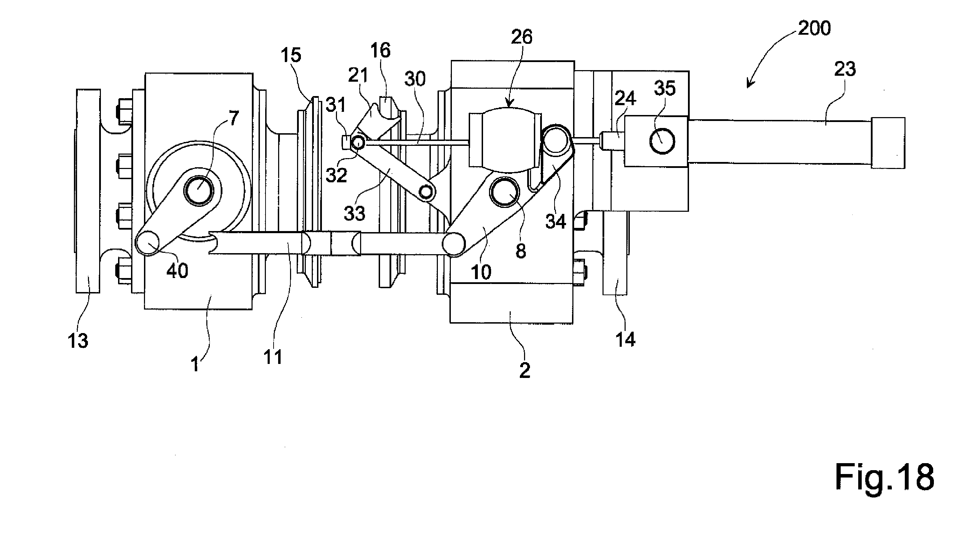

The two valves 5 and 6 are made to rotate by small shafts 7 and 8 under the control of respective levers 9 and 10, the former having a single arm and the latter a double arm. The two levers are connected to each other by an interconnecting bar 11 having one forked end 12 coupled to a pin 40 of lever 9 in automatically releasable manner at the stage of separation of parts 1 and 2 of the fitting, as shown in Figure 18.

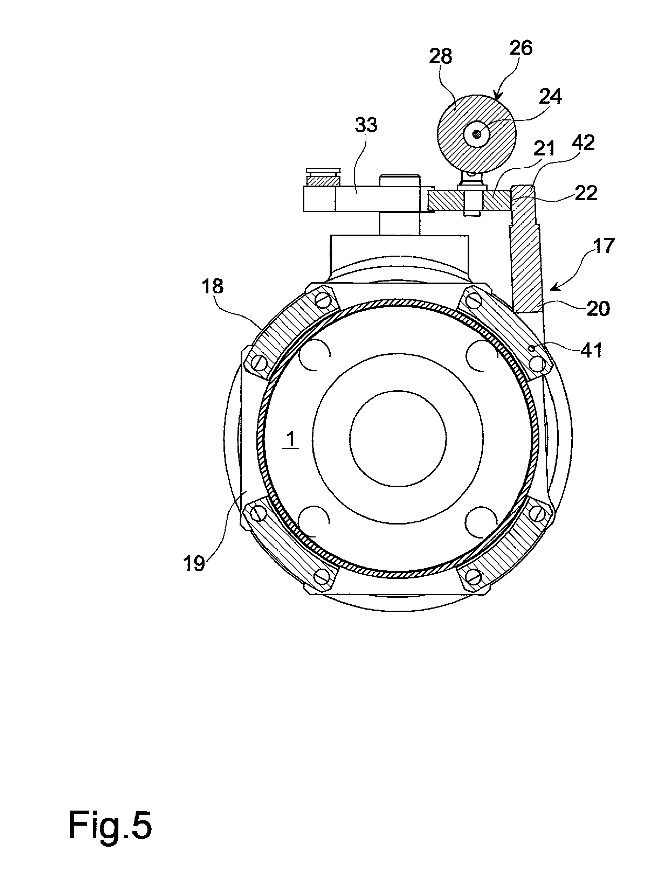

The two parts 1 and 2 of the fitting are provided with respective external flanges 13 and 14 suitable for fixing to respective pipes (one for example on a ship, the other for example on another ship or on a platform or on an oil terminal wharf or jetty on land), and with respective internal flanges 15 and 16 which face each other and are firmly connected to each other by means of an openable uncoupling device 17 (which is per se known), made up of an annular series of coupling elements 18 bridging the two flanges 15 and 16 and connected to each other in articulated manner by pairs of connecting plates 19. A terminal arm 20 completes the above-mentioned annular series (Fig. 5), maintaining it thanks to a shear pin 41, which connects arm 20 to an adjacent coupling element 18, in a position of mutual locking and coupling of the two flanges 15 and 16, defined by the engagement of a pawl 42 in a recess 22 in an arm 21, from which it is displaceable in the uncoupling position in the manner which will be later described.

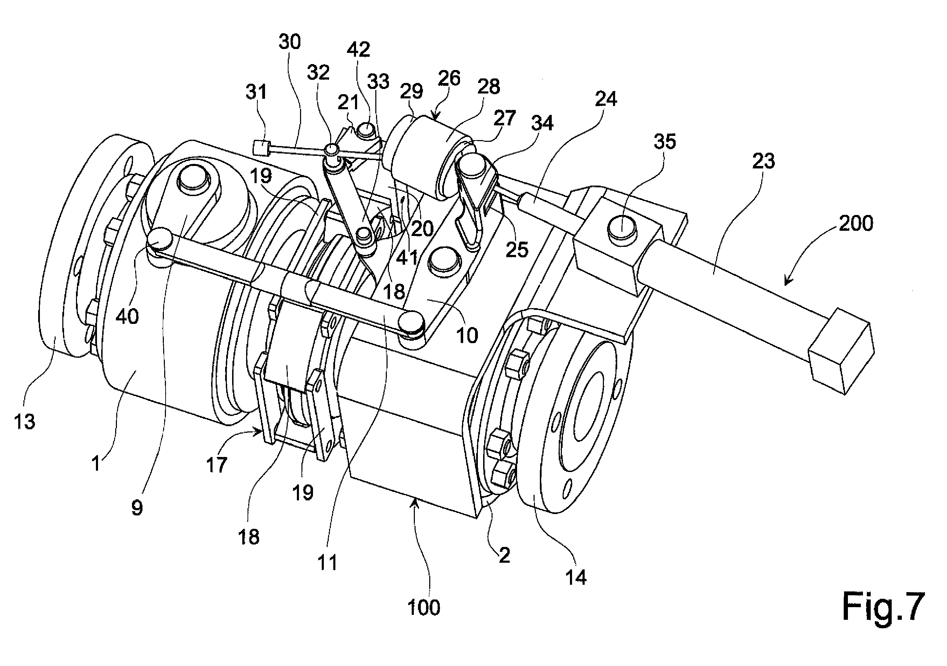

According to the present invention, the fitting 100 has linked to it a safety device 200. By way of example the above-mentioned device includes a hydrodynamic cylinder 23 which is fixed rotatably at 35 to part 2 of the fitting and has a movable rod 24 which passes in sliding and laterally inclinable manner through a window 25 in a post 34 which is mounted on the unconnected end of the double-armed lever 10 and terminates inside a compressible elastic body 26, illustrated in Fig 6, which has a first rigid end plate 27 abutting the above-mentioned post 34 on lever 10, an intermediate cylinder 28 in elastomer (or a precompressed spring) of suitably chosen elastic power (as will subsequently be more clearly seen) and a second rigid end plate 29 fixed to the end of rod 24.

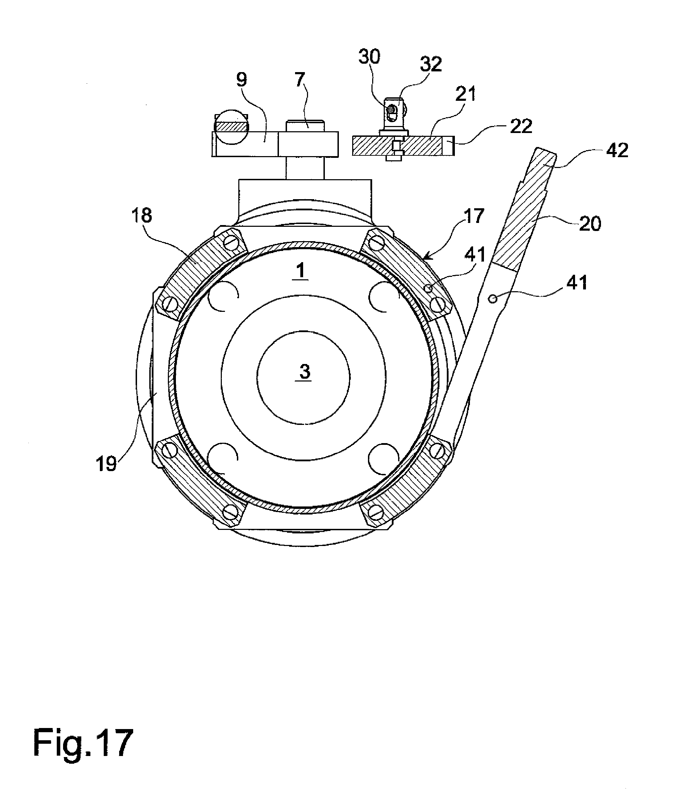

The same plate 29 is also connected by articulated joint to a rigid cable or small cylindrical bar 30 which terminates with a stop pawl 31 after passing in sliding and laterally inclinable manner through a large hole in post 32 fixed to one end of a lever 33 carried rotatably by part 2 of the fitting and capable of controlling by means of arm 21 the distancing of closing arm 20 of the uncoupling device 17 from the closed position of Fig. 5 and towards the open position of Fig. 17.

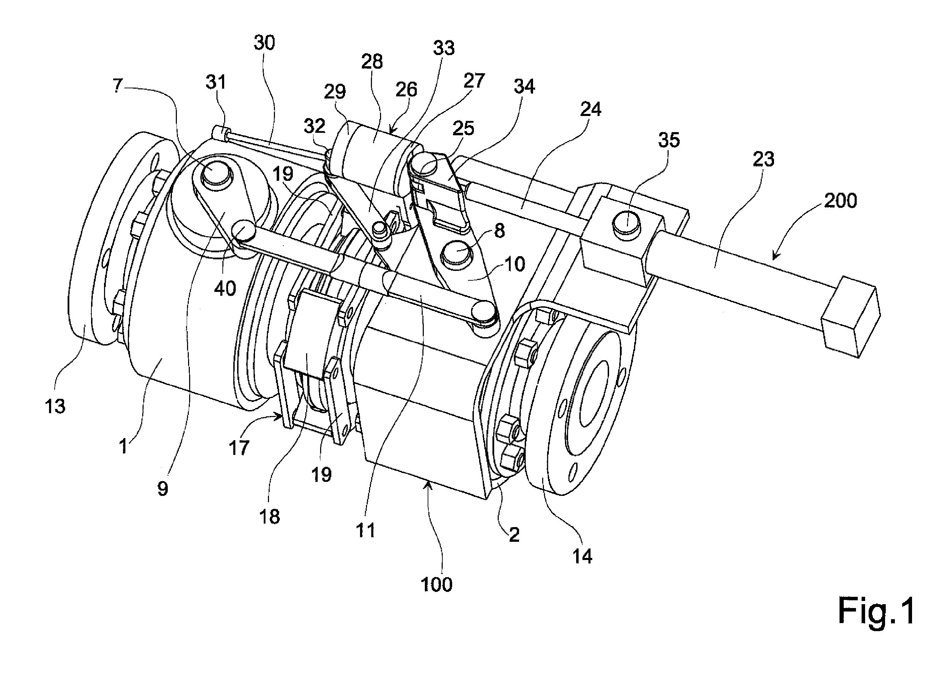

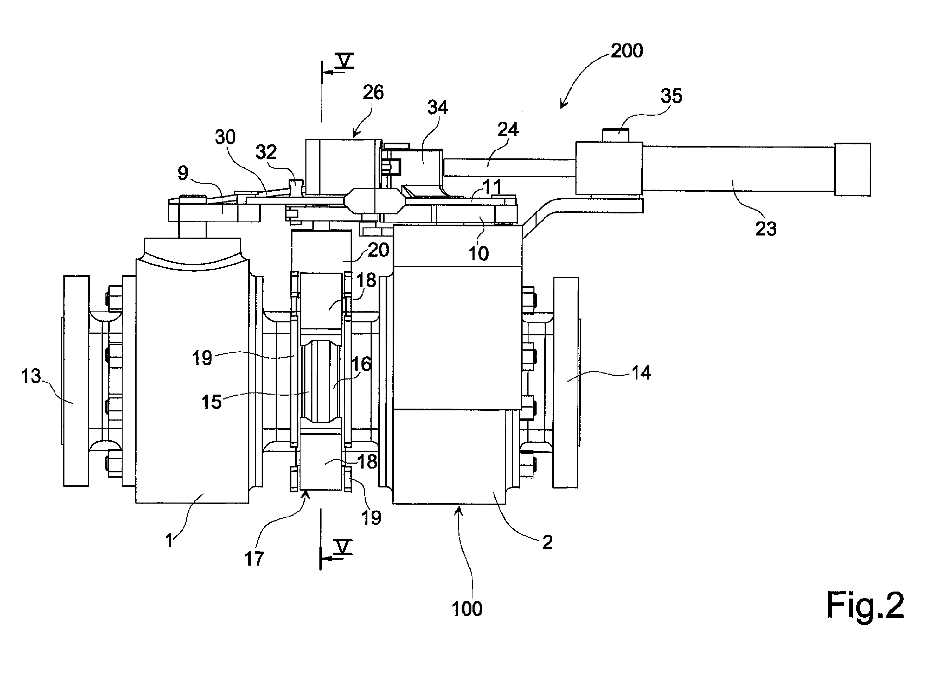

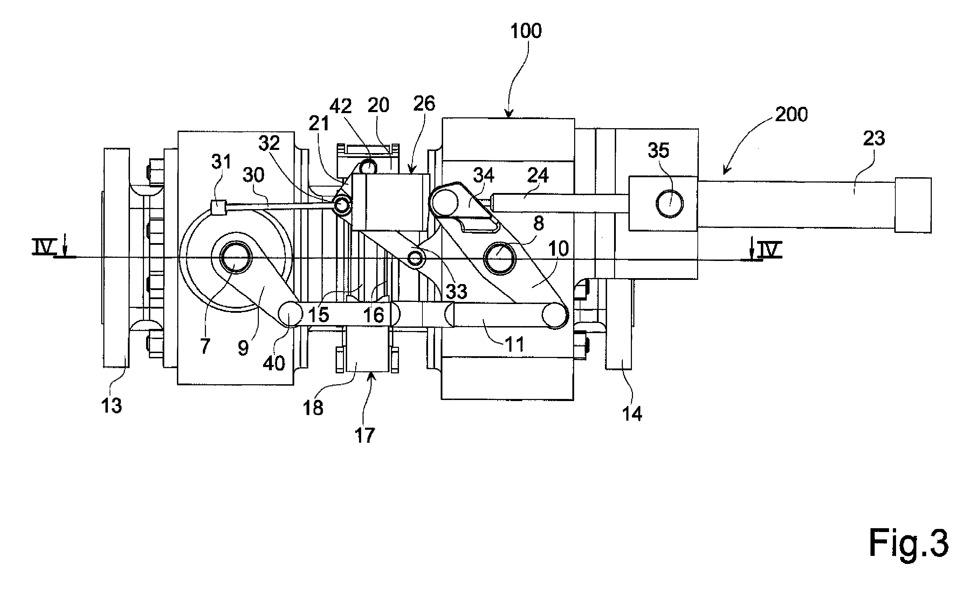

During the normal work of transfer of a petroleum product from one to the other of the two pipes joined by means of fitting 100, the latter remains in the condition shown in Figures 1-6, i.e. with valves 3 and 4 open and parts 1 and 2 joined to each other by the uncoupling device 17 in the closed position.

If because of a rough sea or other similar event the distance between the two connected stations (ship and platform, ship and land, ship and ship) were to increase in such a way as to cause a danger situation for the interconnected apparatus, a distance measurement device would signal the danger state in order directly or indirectly to cause the shortening of cylinder 23 with respect to the position in Fig. 1.

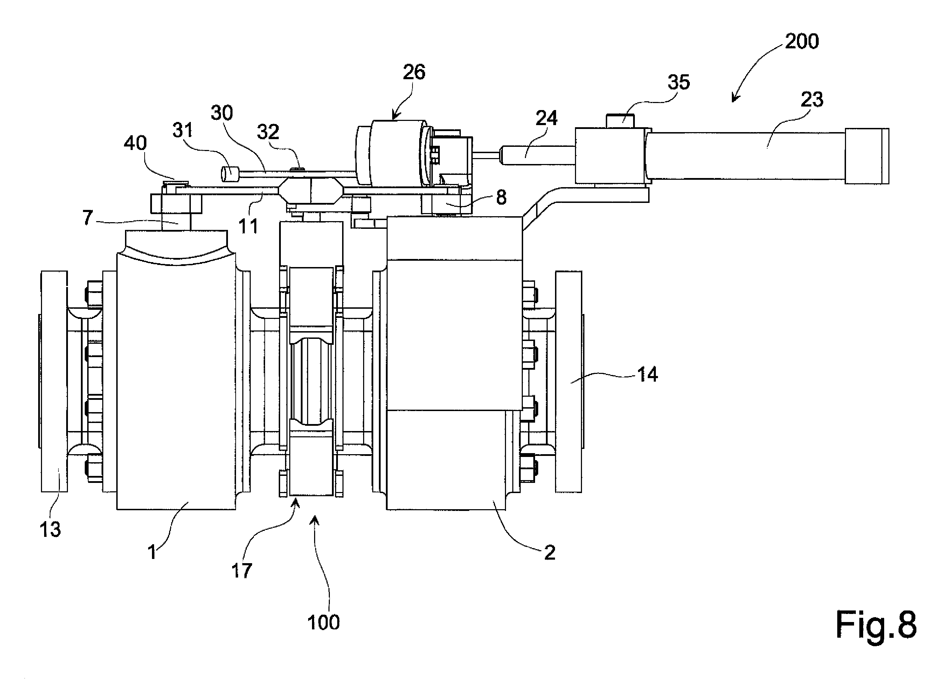

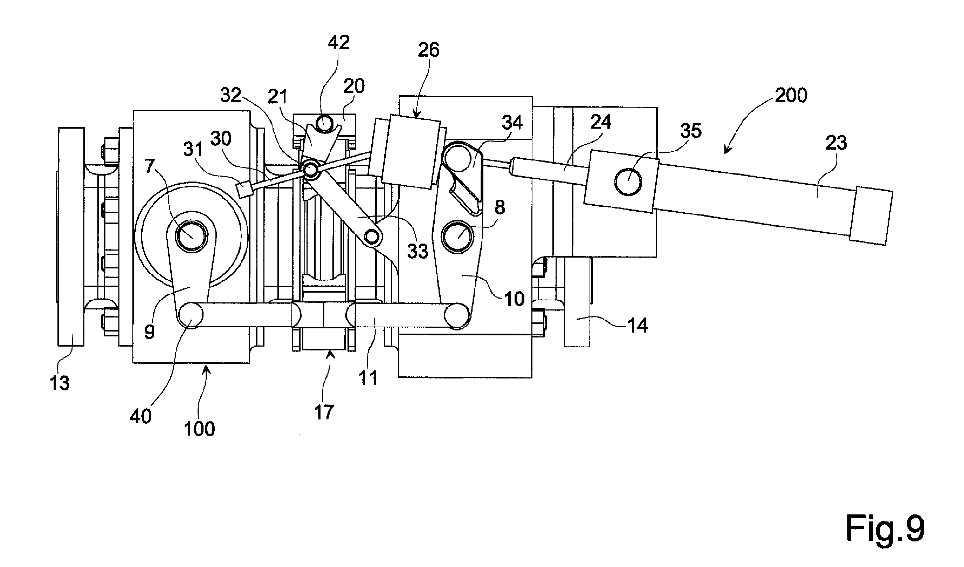

With the compressible elastic body suitably adjusted in such a way as initially not to be subjected to any deformation, a first stage of the back-movement of rod 24 entails a similar back-movement of the elastic body 26, which remaining in an uncompressed condition causes, thanks to the rigid plate 27 resting against the post 34 fitted to the top of lever 10, the start of the rotation of the latter, and consequently of lever 9 connected by bar 11, towards the closing position of valves 5 and 6 (Figures 7-9).

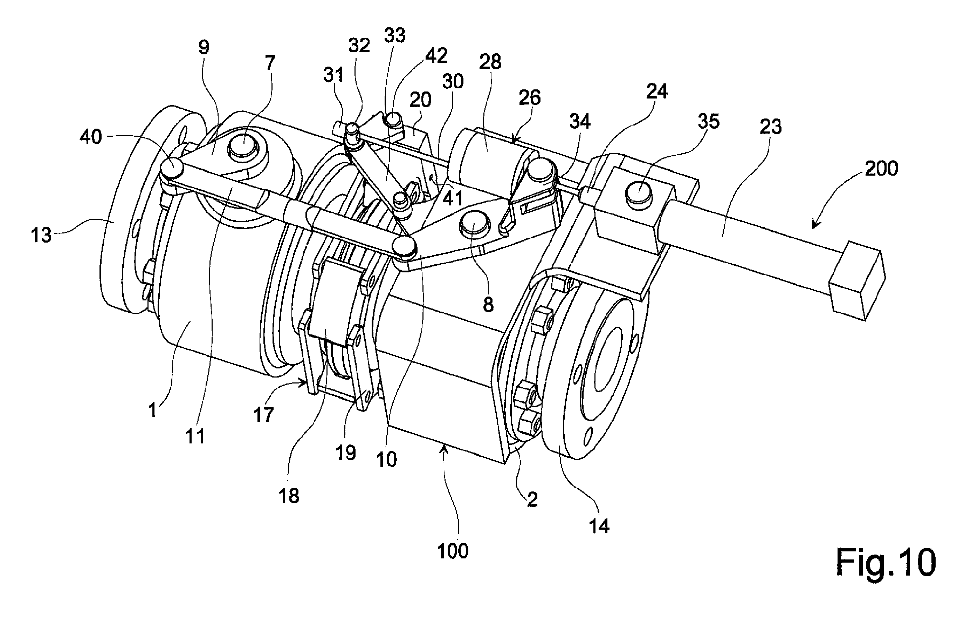

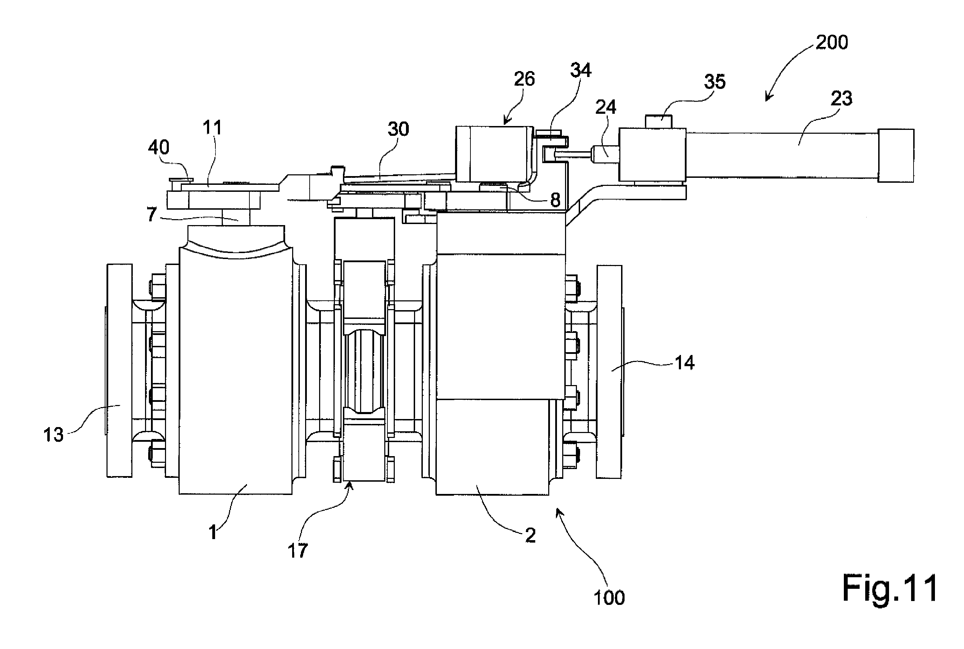

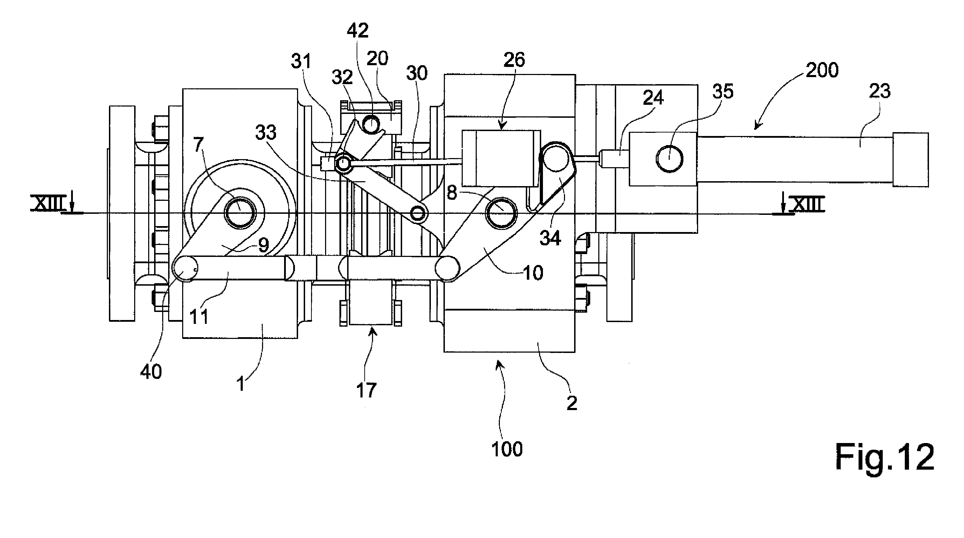

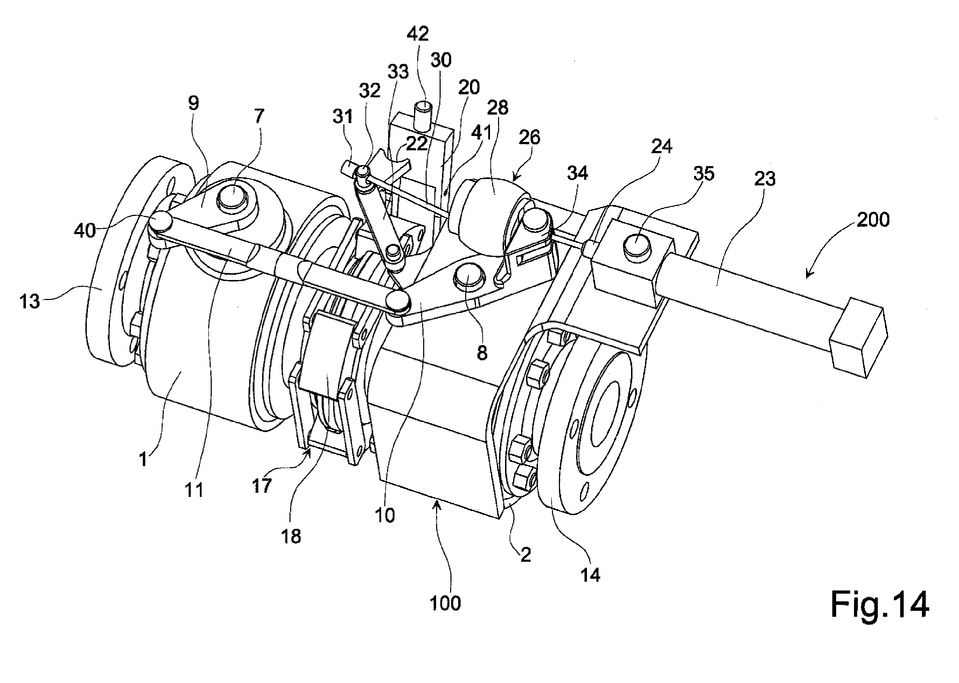

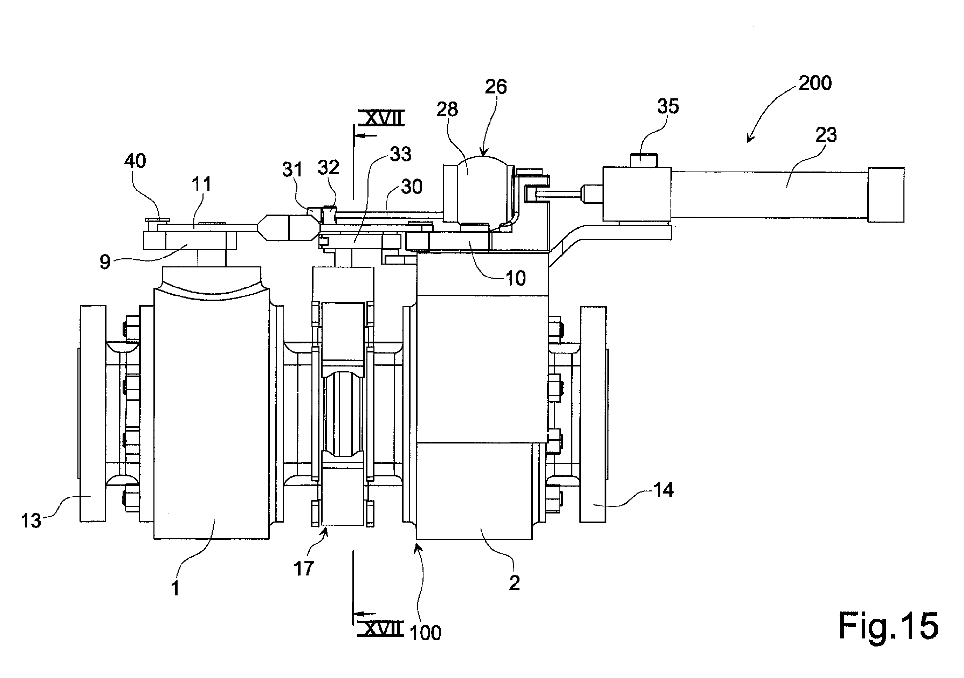

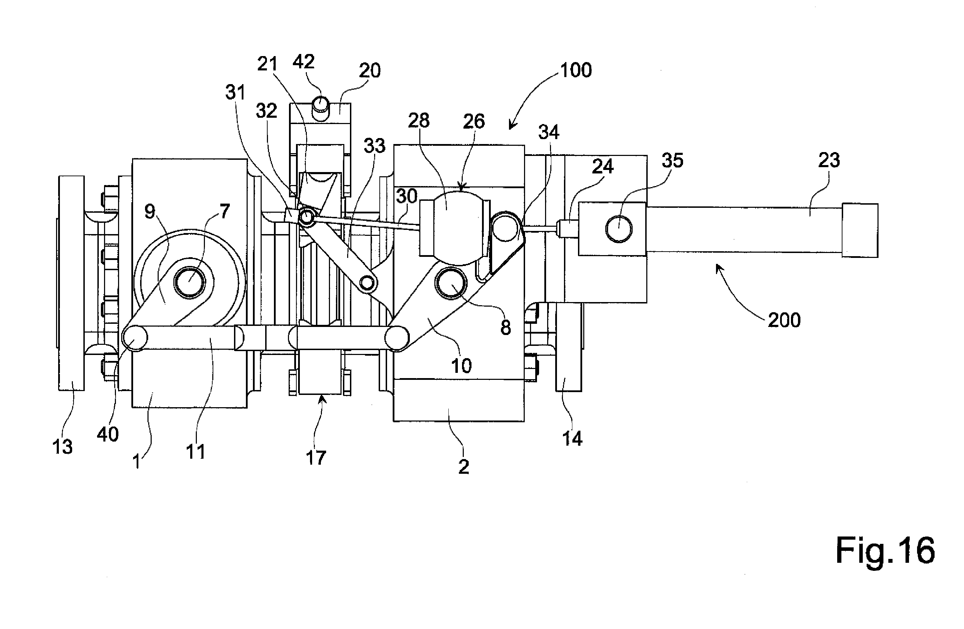

When the two valves reach the position of complete closure (Figures 10-13) and thus encounter a suitable stop device which prevents the valves themselves and levers 9 and 10 from continuing their rotation, a further stage of back-movement of rod 24 causes the displacement of rigid plate 29 of the compressible elastic body 26 towards the opposite rigid plate 27 with consequent compression and bulging of the elastomeric cylinder 28 (Figures 14-16). This also brings about the sliding of rigid cable 30 in the hole in post 32 until the point where its end pawl 31 encounters the above-mentioned post 32 and causes the rotation of the lever 33. The latter acts through arm 21 on the closing arm 20 of the uncoupling device (Fig. 16) in such a way as to cause the rotation of arm 20 into the open position, with breakage of the shear pin 41, and the consequent opening of the uncoupling device 17 to effect the release of flanges 15 and 16 of the two parts 1 and 2 of fitting 100. The two pipes attached to flanges 13 and 14 can thus move apart, resolving the danger situation (Fig. 18).

## Claims

1. Safety device for carrying out in sequence the closure of the valves and the opening of the uncoupling device in a pipe fitting operating in dangerous conditions, said fitting (100) being made up of two couplable and uncouplable parts (1, 2), connectable to respective pipes and provided with respective opening and closing valves (5, 6), and of an openable uncoupling device (17) acting on end flanges (15, 16) of the two parts of the fitting, **characterised by** including a hydrodynamic control cylinder (23) fitted with a rod (24) capable of carrying out a closing stroke of the valves (5, 6) and an opening stroke of the uncoupling device (17), said rod (24) having one end capable of operating, during a first part of the stroke of said rod, on a control lever (10) capable of closing the valves (5, 6) through a compressible elastic body (26) capable of being compressed only after said lever (10) has caused the closure of the valves (5, 6), said end of the rod (24) being further connected to a bar (30) controlling the opening of the uncoupling device (17) which can be engaged in abutment against a lever (33) for opening said uncoupling device (17) only following a compression of said elastic body (26) produced by a second part of the stroke of said rod (24).

2. Safety device according to claim 1, **characterised by** the fact that said compressible elastic body (26) includes a first rigid plate (27) passed through by said rod (24) and in abutment engagement with one end of said contro, lever (10) capable of closing the valves (5, 6), a elastomeric body (28) passed through by said rod (24) and a second rigid plate (29) fixed to said end of the rod (24) and further connected by articulated joint to said control bar (30) capable of opening the uncoupling device (17).

3. Safety device according to claim 2, **characterised by** the fact that said elastomeric body (28) has an elastic compression resistance force superior to the force to be applied to said control lever (10) to cause the opening of said valves (5, 6).

4. Device according to any one of claims 1 to 3, **characterised by** the fact that said rod (24) passes in sliding and laterally inclinable manner through a window (25) in a post (34) mounted on said end of the lever (10) controlling the closure of said valves (5, 6).

5. Safety device according to any one of claims 1 to 4, **characterised by** the fact that said bar (30) passes in sliding and laterally inclinable manner through a post mounted on said lever (33) for opening the uncoupling device (17) and provides at the free end a stop nipple (31) engageable in abutment with said post (32) mounted on said lever (33) for opening said uncoupling device (17).

6. Device according to any one of claims 1 to 5, **characterised by** the fact that said lever (10) controlling the closure of said valves (5, 6) acts on a control shaft (8) capable of rotating of one (6) of said valves (5, 6) and is connected to a control shaft (7) capable of rotating of the other (5) of said valves (5, 6) by means of a connecting bar (11) which is releasable under traction.
